# EUROPEAN PATENT SPECIFICATION

(11) **EP 2 576 744 B1**
(45) Date of publication and mention of the grant of the patent: **11.11.2015**
(21) Application number: 11719830.9
(22) Date of filing: 17.05.2011
(51) Int. Cl.: C11D 1/62, C11D 3/48, C11D 3/22, C11D 3/37, C11D 3/00, A01N 33/12, A01N 25/34

(54) **LAUNDRY TREATMENT COMPOSITION**
WÄSCHEBEHANDLUNGSZUSAMMENSETZUNG
COMPOSITION DE TRAITEMENT DU LINGE

(30) Priority: 16.07.2010 EP 10169775; 31.05.2010 IN MU16512010
(43) Date of publication of application: 10.04.2013
(73) Proprietor: Unilever N.V., 3013 AL Rotterdam (NL); Unilever PLC, a company registered in England and Wales under company no. 41424 of, London EC4Y 0DY (GB)
(72) Inventor: BARNE, Sameer, Keshav, Bangalore 560 066 (IN); PERINCHEERY, Aravindakshan, Bangalore 560 066 (IN); RASTOGI, Abhishek, Bangalore 560 066 (IN); SAJI, Maya, Treesa, Bangalore 560 066 (IN); SINHA, Archana, Bangalore 560 066 (IN)
(74) Representative: van Benthum, Wilhelmus A. J.
(86) International application number: PCT/EP2011/057916
(87) International publication number: WO 2011/151167

(56) References cited:
- EP-A1- 0 000 225
- EP-A1- 1 111 034
- WO-A1-00/34423
- US-A- 3 265 624
- US-A- 5 976 462

## Description

### Field of the invention

The present invention relates to a method for treatment of a fabric with anti-microbial material. It further relates to compositions for depositing such anti-microbial material onto a fabric.

### Background of the invention

Hygiene is of high priority to present day consumers.

Human skin generally contains several different micro-organisms in concentrations exceeding millions or even billions of colony forming units (cfu's) per square centimetre (cm²). Many of these micro organisms are harmless, but there are also various pathogenic types or subspecies present, such as *Escherichia coli,* also referred to a *E. coli,* and *Staphylococcus aureus,* also referred to as *S*. *aureus.* Several other bacteria can be found in the skin flora, such as *Staphylococcus epidermidis,* also referred to as *S*. *epidermidis,* which is generally non-pathogenic, but is thought to be causing unpleasant body odour.

When an anti microbial agent could be deposited onto a garment, the bad smell created by the growth of skin bacteria in sweat could be reduced.

Therefore present day consumers appreciate laundry treatment products that have anti-microbial activity.

Various other hygiene materials have been proposed in the art. In recent years a number of publications have been made on the use of essential oils for anti-bacterial action.

WO 00/34423 (Hindustan Lever Limited, 2000) discloses a synergistic detergent composition for cleaning fabric or hard surfaces. The detergent composition comprises of an anionic surfactant, cationic disinfectant component and an anionic polymer. The invention describes that incorporation of the anionic polymer in an anionic surfactant based detergent formulation enables the cationic surfactant to be active. This provides the detergent composition to provide superior soil removal and hygienic benefits to the substrate. This Application does not disclose a polymer complex.

EP 1111034 A1 (The Procter & Gamble Company, 2001) discloses a laundry and/or cleaning and/or fabric treatment composition comprising a benefit agent and a carrier. The benefit agent may be selected from a flavour ingredient, a pharmaceutical ingredient, a bio control ingredient, a perfume composition, a refreshing cooling ingredient and a mixture thereof. The carrier agent is a polymer. The combination of the benefit agent with the carrier provides the benefit agent sufficient protection against oxidation and further effective deposition on the fabric. This Application doesn't disclose a polymer complex providing improved and lasting hygiene efficacy.

However, a laundry product having anti-microbial effect remains to be desired, preferably at low dosage of the anti-microbial agent for safety reasons.

It is therefore an object of the invention to provide a laundry treatment composition, having good anti-microbial properties, at low levels of anti microbial agent.

It is a further object of the invention to provide a composition that is effective against common skin bacteria, including both gram-positive and gram-negative bacteria.

Surprisingly it has been found that composition comprising a low amount of quaternary ammonium biocide and a polymer complex provides improved and lasting hygiene efficacy.

### Summary of the invention

Accordingly the present invention provides a method for providing an anti-microbial effect to laundry comprising the steps of depositing a polymer complex comprising polymer A selected from the group of homopolymers and copolymers of carboxylic acid, and a polymer B selected from the group of homopolymers and copolymers of alkylene oxides, vinyl pyrrolidone; and/or the group of homopolymers and copolymers of vinyl alcohol, saccharides, hydroxyalkyl cellulose; wherein the polymer A and polymer B are not of the same class and an quaternary ammonium biocide to a fabric article, and leaving the fabric article to dry; and, wherein the fabric is not rinsed between steps of depositing and drying.

In a second aspect the invention provides the use of a combination of a polymer complex or mixture comprising polymer A selected from the group of homopolymers and copolymers of carboxylic acid and , and a polymer B selected from the group of homopolymers and copolymers of alkylene oxides, vinyl pyrrolidone and/or their; and/or the group of homopolymers and copolymers of vinyl alcohol, saccharides, hydroxyalkyl cellulose ; and an quaternary ammonium biocide, for providing a anti-microbial effect on fabric articles.

By anti-microbial effect is meant being able to kill bacteria under standard test conditions (e.g. AATCC 100-1999) for antibacterial finishes on textile material.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated.

Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The composition used in the invention thus comprises a polymer complex or mixture and a quaternary ammonium biocide.

### Polymer complex

The polymer complex according to the invention comprises a polymer A selected from the group of homopolymers and copolymers of carboxylic acid , and a polymer B selected from the group of homopolymers and copolymers of alkylene oxides, vinyl pyrrolidone ; and/or the group of homopolymers and copolymers of vinyl alcohol, saccharides, hydroxyalkyl cellulose The composition according to the invention comprises a polymer A and a polymer B. Polymers A and B are typically selected such that they form a complex due to the formation of hydrogen bonds.

The polymers may be homo polymers or co polymers, wherein by copolymer of monomer X is meant any polymer that contains the monomer X and at least one further monomer.

Polymers A and B are preferably present in the composition in a ratio of between 1:5 and 5:1, more preferably between 1:2 and 2:1

### Polymer A

According to the present invention, polymer A is a polymer selected from the group of homopolymers and copolymers of carboxylic acid. Polymer A has a plurality of carboxyl groups. The polymer A has a molecular mass preferably from 300 to 10⁹ D (Dalton, also referred to as atomic mass units, amu). The polymer A is selected from the class consisting of homopolymers or copolymers of carboxylic polymers, including natural synthetic and semi-synthetic polymers in this class.

Some non-limiting examples of polymer A according to the present invention include:
(a) homopolymers of a carboxylic acid, including but not limited to polycarboxylic acid such as polyacrylic acid, polymaleic acid or copolymers of acrylic and maleic acid.
(b) polysaccharides comprising carboxyl groups. Such polysaccharides may include (but are not limited to) sodium alginate, natural gums and sodium carboxymethyl cellulose.

Homopolymers or copolymers of carboxylic acid have a molecular mass of preferably from 2x10³ to 10⁷ D more preferably from 5x10⁴ to 10⁶ D and most preferably from 9x10⁴ to 5x10⁵ D.

If the polymers are in particulate form, the particle size is preferably less than 200µm, preferably less than 100µm, more preferably less than 50µm still more preferably less than 10µm, or even less than 5µm.

The homopolymers or copolymers of polysaccharide have a molecular mass of preferably from 10³ to 10⁹ D, more preferably from 10⁴ to 10⁹ D and most preferably from 10⁵ to 10⁹ D.

Polymer A is preferably at least partially neutralised in the Sodium (Na⁺) form, preferably at least 10%w of polymer A is neutralised, more preferably at least 20%, still more preferably at least 50%.

Polymer A may be synthetic, semi-synthetic or natural. However, synthetic or semi-synthetic polymers are preferred.

Polymer A is preferably water soluble or water dispersible, most preferably polymer A is water soluble.

Polymer A is selected from a class consisting of homopolymers or copolymers of carboxylic acid.

The homopolymers or copolymers of carboxylic acid are preferably a polyacrylic acid or a copolymer thereof. Examples include SOKALAN® PA (BASF) and CARBOPOL® (Lubrizol).

The concentration of polymer A in the composition according to the invention is preferably between 0.005 and 25% by weight, more preferably at least 0.01%, or even at least 0.05%, but preferably not more than 15%, more preferably less than 5%, still more preferably less than 1%, even more preferably less than 0.5%, even less than 0.1 %, or even less than 0.05% by weight of the composition.

The amount of polymer A relative to the fabric surface area is preferably from 0.5 to 200 µg/cm² of fabric surface area, more preferably from 1 to 100 µg/cm², and most preferably from 2 to 50 µg/cm² of fabric surface area. The term "fabric surface area" as used herein refers to surface area of one side of the fabric.

### Polymer B

According to the present invention, polymer B has a monomeric unit comprising a group that can form hydrogen bonds with the carboxyl groups of polymer A.

Accordingly, polymer B is selected from the group of homopolymers and copolymers of alkylene oxides, vinyl pyrrolidone ; and/or the group of homopolymers and copolymers of vinyl alcohol, saccharides, hydroxyalkyl cellulose.

The group of homopolymers and copolymers of vinyl alcohol, saccharides, hydroxyalkyl cellulose, is generally not water soluble. In order to obtain the benefit of this group of polymers the particle size is set such that the particles are easily dispersible in water or and aqueous solution (i.e. a wash or rinse liquor). If the polymers are in particulate form, the particle size is preferably less than 200µm, more preferably less than 100µm, even more preferably less than 50µm still more preferably less than 10µm, or even less than 5µm.

According to an essential aspect, polymer A and polymer B are not of the same class. Polymers A and B are selected from different classes of polymers. Without wishing to be limited by theory, it is believed that the two polymers A and B, when dissolved in water, form a complex with a solubility lower than each of the polymers A and B, which helps in enhanced deposition and other benefits.

Polymer B preferably has a molecular mass from 10³ to 10⁹ D.

Homopolymers or copolymers of vinyl pyrrolidone or vinyl alcohol preferably have a molecular mass of between 10³ and 10⁷ D, more preferably from 10⁴ to 10⁶ D and most preferably from 30,000 to 500,000 D. Commercially available polyvinyl pyrrolidone can be used, one example of which is LUVISKOL® (BASF).

Homopolymers or copolymers of poly alkylene oxide preferably have a molecular mass greater than 2x10⁴ D. The molecular mass is preferably from 2x10⁴ to 10⁶ D, more preferably from 3x10⁴ to 5x10⁵ D and most preferably from 5x10⁴ to 2x10⁵ D.

Homopolymers or copolymers of saccharide preferably have a molecular mass of preferably from 10³ to 10⁹ D, more preferably from 10⁴ to 10⁹ D and most preferably from 10⁵ to 10⁹ D. Any commercially available poly alkylene oxide, for example POLYOX® (Dow Chemical Co) can be used according to the present invention.

Polymer B may be synthetic, semi-synthetic or natural. However, synthetic or semi-synthetic polymers are preferred.

According to a preferred embodiment, the polymer B is water soluble.

It is particularly preferred that the polymer B is selected from a class consisting of homopolymers or copolymers of vinyl pyrrolidone or alkylene oxide.

The concentration of polymer B in the composition according to the invention is preferably between 0.005 and 20% by weight, more preferably at least 0.01%, or even at least 0.05%, but preferably not more than 10%, more preferably less than 5%, still more preferably less than 1%, even more preferably less than 0.5%, even less than 0.1%, or even less than 0.05% by weight of the composition.

The amount of polymer B relative to the fabric surface area is preferably from 0.5 to 200 µg/cm² of fabric surface area, more preferably from 1 to 100 µg/cm², and most preferably from 2 to 50 µg/cm² of fabric surface area. The term "fabric surface area" as used herein refers to surface area of one side of the fabric.

Some examples of combinations of polymer A and polymer B, which are particularly preferred, are given below.

**Table 1: Preferred combination of the polymers**

| **Polymer A** | **Polymer B** |
|---|---|
| Polyacrylic acid (PAA) | Poly vinyl pyrrolidone (PVP) |
| Polyacrylic acid (PAA) | Polyethylene Oxide(PEO) |
| Polyacrylic acid (PAA) | Polyethylene Glycol (PEG) |
| Polyacrylic acid (PAA) | Poly vinyl alcohol (PVA) |
| Sodium carboxymethyl cellulose (SCMC) | Polyethylene Oxide (PEO) |
| Polyacrylic acid(PAA) | Hydroxyethyl cellulose |
| Starch-graft-polymethacrylic acid | Polyethylene Oxide |
| Starch-graft-polymethacrylic acid | Polyvinyl pyrrolidone |
| Pluronic-g-Polyacrylic acid | Polyethylene Oxide |
| Pluronic-g-Polyacrylic acid | Polyvinyl pyrrolidone |
| Sodium carboxymethyl cellulose | Hydroxyethyl cellulose |
| Sodium carboxymethyl cellulose | Polyvinyl alcohol |

The most preferred combinations of the polymers are PAA-PVP, PAA-PEO, PAA-PEG, Starch-graft-polymethacrylic acid-Polyethylene Oxide.

### Quaternary ammonium biocide

The quaternary ammonium biocide is preferably selected from Cetyl-trimethyl-ammonium Chloride, Cetyl-trimethyl-ammonium Bromide, Tetradecyl-trimethyl-ammonium Chloride, Dodecyl-trimethyl-ammonium Chloride, Stearyl-trimethyl-ammonium Chloride, Octadecyl-trimethyl-ammonium Chloride, Dodecylpyridinium Chloride, Cetylpyridinium Chloride, Benzalkonium Chloride, Tetrabutyl-ammonium Chloride, Tetraheptyl-ammonium Chloride, 1,3-Decyl-2-methyl-imidazolium Chloride, 1-Hexadecyl-3-methyl-imidazolium Chloride, Didecyl-dimethyl-ammonium Bromide, Didecyl-dimethyl-ammonium Chloride.

Bromides are typically not preferred due to their toxicity.

The most preferred quaternary ammonium biocide is benzalkonium chloride and cetylpyridinium chloride.

The quaternary ammonium biocide is preferably present in the composition in a concentration of between 0.01 and 10% by weight of the composition, but preferably at least 0.02%, or even at least 0.05% by weight of the composition, while preferably not more than 5%, more preferably not more than 1%, still more preferably not more than 0.5%, further preferably not more than 0.4%, further preferably not more than 0.3%, still further preferably not more than 0.2% or even not more than 0.1% by weight of the concentration.

It is preferred that the composition comprises a second quaternary ammonium biocide.

When more than one quaternary ammonium biocide is present in the composition, the above mentioned concentrations may be considered to be the concentrations of the combined quaternary ammonium biocides, but preferably relate to each of the individual quaternary ammonium biocides.

Without wishing to be bound by theory, it is believed that the biocide is incorporated into the polymer complex formed from Polymer A and Polymer B during the dissolution of polymer. The polymer complex, having solubility lower than each of the polymers A and B, helps in enhanced deposition of the biocide onto the fabric. Thus, providing enhanced biocidal properties to the fabric.

### Compositions

The compositions according to the invention may be applied in various laundry treatment compositions, but the use of the invention in fabric conditioner compositions is the most preferred.

The pH of the compositions is preferably neutral or mildly acidic, more preferably between pH 2 and 9, still more preferably at least pH 3, while more preferably less than pH 8, still more preferably less than pH 7, or even less than pH 5.

### Method

In another aspect there is provided a method for treatment of a fabric, by depositing a composition according to the invention to a fabric in the rinse step for providing an anti-microbial effect comprising the steps of applying a composition to a rinse liquor, and leaving the fabric to dry. The fabric is left to dry after treatment, in order to reduce loss of the deposited material.

Preferably the rinse liquor to cloth (fabric) ratio is between 20:1 and 1:1.

### Examples

The invention will now be illustrated by means of the following non-limiting examples.

### Example 1: Anti-bacterial tests

In this example the antibacterial efficacy of a fabric treatment composition according to the invention is demonstrated using a standard method, AATCC 100-1999 for antibacterial finishes on textile materials.

Replicate samples of fabric were inoculated with working culture of individual bacterial species (eg *S.epidermidis* and *E.coli*) suspended in a common nutrient medium (TSB). The samples were incubated under humid conditions at 37°C for a specified contact time of 4 hours. After incubation, the cells were recovered in a neutralizer (D/E Neutralizer) using a Griffin® shaker. The viable count is determined by CY agar (supplied by HiMedia) pour plating Activity is assessed by comparing the size of the population of untreated with that of treated specimen.

The following formulations were tested.

**Table 1a: Examples**

| | **Blank (%w)** | **Example 1 (%w)** | **Example 2 (%w)** | **Example 3 (%w)** | **Example 4 (%w)** |
|---|---|---|---|---|---|
| **S. epidermidis (start, cfu/cm2)** | 24x10⁶ | 24x10⁶ | 24x10⁶ | 24x10⁶ | 24x10⁶ |
| | | | | | |
| **PAA ¹⁾** | | 0.015 | 0.015 | 0.015 | 0.015 |
| **PEO ¹⁾** | | 0.01 | 0.01 | 0.01 | 0.01 |
| **Benzalkonium chloride** | | 0.05 | 0.02 | 0.01 | 0.005 |
| **Saline Solution ²⁾** | balance | Balance | balance | balance | Balance |
| | | | | | |
| **Kill (cfu/cm2 remaining)** | 24x10⁶ | 2 | 520 | 0.172x10⁶ | 0.84x10⁶ |
| **Kill (log reduction)** | 0.0 | 7.1 | 4.7 | 2.2 | 1.5 |

**Table 1b: Comparative examples**

| | **Comp A (%w)** | **Comp B (%w)** | **Comp C (%w)** | **Comp D (%w)** | **Comp E (%w)** |
|---|---|---|---|---|---|
| **S. epidermidis (start, cfu/cm2)** | 24x10⁶ | 24x10⁶ | 24x10⁶ | 24x10⁶ | 24x10⁶ |
| | | | | | |
| **PAA ¹⁾** | 0.015 | | | | |
| **PEO ¹⁾** | 0.01 | | | | |
| **Benzalkonium chloride** | | 0.05 | 0.02 | 0.01 | 0.005 |
| **Saline Solution ²⁾** | Balance | balance | balance | Balance | Balance |
| | | | | | |
| **Kill (cfu/cm2 remaining)** | 19.4x10⁶ | 0.004x10⁶ | 0.014x10⁶ | 0.48x10⁶ | 1.08x10⁶ |
| **Kill (log reduction)** | 0.1 | 3.8 | 3.3 | 1.7 | 1.4 |

| | | | | | |
|---|---|---|---|---|---|
| ¹⁾ The polymer complex comprised PAA (poly acrylic acid; Mw 100,000 D, ex Sigma-Aldrich) and PEO (poly ethylene oxide; Mw 100,000 D, ex Sigma-Aldrich), in a ratio of 1.5:1 in amounts as given in the table. ²⁾ The saline solution comprised 0.1 % NaCl and Citric acid to a pH of 3.6. | | | | | |

The results above show the unexpected improvement in bacterial kill of the polymer complex together with the quaternary ammonium biocide, while the separate components show substantially less kill of bacteria.

### Example 2: Comparison with a commercially available fabric conditioners.

The same protocol was followed as in example 1, but now also compared to a commercially available fabric conditioner (Comfort, ex Unilever India), which comprises a quaternary ammonium surfactant, and a different quaternary ammonium compound, CPC (cetylpyridinium chloride).

The compositions and results for example 2 are given below.

**Table 2: Comparative examples**

| | **Blank (%w)** | **Comp A (%w)** | **Comp F (%w)** | **Comp G (%w)** | **Example 5 (%w)** |
|---|---|---|---|---|---|
| **S. epidermidis (start, cfu/cm2)** | 28x10⁶ | 28x10⁶ | 28x10⁶ | 28x10⁶ | 28x10⁶ |
| | | | | | |
| **PAA ¹⁾** | | 0.015 | | | 0.015 |
| **PEO ¹⁾** | | 0.01 | | | 0.01 |
| **CPC** | | | 0.1 | | 0.1 |
| **Comfort** ® | | | | 1 | |
| **Saline Solution ²⁾** | Balance | balance | balance | Balance | Balance |
| **Kill (cfu/cm2 remaining)** | 28x10⁶ | 27x10⁶ | 1200 | 10x10⁶ | 0 |
| **Kill (log reduction)** | 0.0 | 0.0 | 4.3 | 0.4 | 7.4 |

| | | | | | |
|---|---|---|---|---|---|
| ¹⁾ The polymer complex comprised PAA (poly acrylic acid; Mw 100,000 D, ex Sigma-Aldrich) and PEO (poly ethylene oxide; Mw 100,000 D, ex Sigma-Aldrich), in a ratio of 1.5:1 in amounts as given in the table. ²⁾ The saline solution comprised 0.1% NaCl and Citric acid to a pH of 3.6. | | | | | |

The table above shows a surprising antibacterial effect of the combination of a polymer complex and a quaternary ammonium biocide.

### Example 3: effect of Polymer concentration

The same protocol was followed as in example 1, but now comparing different polymer concentrations.

The following formulations were tested.

**Table 3a: Examples**

| | **Example 6 (%w)** | **Example 7 (%w)** | **Example 8 (%w)** | **Example 9 (%w)** |
|---|---|---|---|---|
| **S. epidermidis (start, cfu/cm2)** | 24x10⁶ | 24x10⁶ | 24x10⁶ | 24x10⁶ |
| | | | | |
| **PAA ¹⁾** | 0.003 | 0.006 | 0.015 | 0.06 |
| **PEO ¹⁾** | 0.002 | 0.004 | 0.01 | 0.04 |
| **Benzalkonium chloride** | 0.02 | 0.02 | 0.02 | 0.02 |
| **Saline Solution ²⁾** | Balance | Balance | Balance | Balance |
| | | | | |
| **Kill (cfu/cm2 remaining)** | 13000 | 580 | 520 | 500 |
| **Kill (log reduction)** | 3.3 | 4.6 | 4.7 | 4.7 |

**Table 3b: Comparative examples**

| | **Blank (%w)** | **Comparative H (%w)** | **Comparative I (%w)** |
|---|---|---|---|
| **S. epidermidis (start, cfu/cm2)** | 24x10⁶ | 24x10⁶ | 24x10⁶ |
| | | | |
| **PAA ¹⁾** | | 0.015 | |
| **PEO ¹⁾** | | 0.01 | |
| **Benzalkonium chloride** | | | 0.02 |
| **Saline Solution ²⁾** | Balance | Balance | Balance |
| | | | |
| **Kill (cfu/cm2 remaining)** | 24x10⁶ | 20x10⁶ | 0.014x10⁶ |
| **Kill (log reduction)** | 0.0 | 0.1 | 3.3 |

| | | | |
|---|---|---|---|
| ¹⁾ The polymer complex comprised PAA (poly acrylic acid; Mw 100,000 D, ex Sigma-Aldrich) and PEO (poly ethylene oxide; Mw 100,000 D, ex Sigma-Aldrich), in a ratio of 1.5:1 in amounts as given in the table. ²⁾ The saline solution comprised 0.1% NaCl and Citric acid to a pH of 3.6. | | | |

The results above show the unexpected improvement in bacterial kill of the polymer complex together with the quaternary ammonium biocide, while the separate components show substantially less kill of bacteria.

### Example 4: lasting hygiene effect

The same protocol was followed as in example 1, but now comparing testing anti bacterial efficacy after 4 hrs, 15 hrs and 24 hrs.

The following formulations were tested.

**Table 4: Examples**

| | **Blank (%w)** | **Comp A (%w)** | **Comp C (%w)** | **Ex 2 (%w)** |
|---|---|---|---|---|
| **S. epidermidis (start, cfu/cm2)** | 24x10⁶ | 24x10⁶ | 24x10⁶ | 24x10⁶ |
| | | | | |
| **PAA ¹⁾** | | 0.015 | | 0.015 |
| **PEO ¹⁾** | | 0.01 | | 0.01 |
| **Benzalkonium chloride** | | | 0.02 | 0.02 |
| **Saline solution ²⁾** | Balance | balance | Balance | Balance |
| | | | | |
| **Kill (cfu/cm2 remaining after 4hrs)** | 24x10⁶ | 19.4x10⁶ | 14000 | 520 |
| **Kill (log reduction after 4 hrs)** | 0.0 | 0.1 | 3.3 | 4.7 |
| **Kill (cfu/cm2 remaining after 15hrs)** | 18.6x10⁶ | 11.6x10⁶ | 2840 | 208 |
| **Kill (log reduction after 15 hrs)** | 0.1 | 0.3 | 3.9 | 5.1 |
| **Kill (cfu/cm2 remaining after 24hrs)** | 15.2x10⁶ | 8.4x10⁶ | 680 | 30 |
| **Kill (log reduction after 24 hrs)** | 0.2 | 0.5 | 4.6 | 5.9 |

| | | | | |
|---|---|---|---|---|
| ¹⁾ The polymer complex comprised PAA (poly acrylic acid; Mw 100,000 D, ex Sigma-Aldrich) and PEO (poly ethylene oxide; Mw 100,000 D, ex Sigma-Aldrich), in a ratio of 1.5:1 in amounts as given in the table. ²⁾ The saline solution comprised 0.1% NaCl and Citric acid to a pH of 3.6. | | | | |

The results above show the unexpected improvement in bacterial kill of the polymer complex together with the quaternary ammonium biocide, even after 24 hrs.

## Claims

1. A method of providing an anti-microbial effect to laundry comprising the steps of:
a depositing a polymer complex comprising
i polymer A selected from the group of homopolymers and copolymers of carboxylic acid, and
ii a polymer B selected from the group of homopolymers and copolymers of alkylene oxides, vinyl pyrrolidone; and/or the group of homopolymers and copolymers of vinyl alcohol, saccharides, hydroxyalkyl cellulose;
wherein the polymer A and polymer B are not of the same class and
iii a quaternary ammonium biocide to a fabric article, and
b leaving the fabric article to dry; and,
wherein the fabric is not rinsed between steps a and b.

2. A method of providing an anti-microbial effect to laundry according to claim 1, wherein polymer A is present in a concentration of between 0.005 and 25% by weight of the composition.

3. A method of providing an anti-microbial effect to laundry according to any one of claim 1 or 2, wherein polymer B is present in a concentration of between 0.005 and 20% by weight by weight of the composition.

4. A method of providing an anti-microbial effect to laundry according to any one of claim 1 to 3, wherein the quaternary ammonium biocide is present in a concentration of between 0.01 and 10% by weight of the composition.

5. A method of providing an anti-microbial effect to laundry according to any one of the preceding claims, wherein the pH of the composition is between 2 and 9.

6. Use of a combination of a polymer complex comprising
a polymer A selected from the group of homopolymers and copolymers of carboxylic acid, and
b a polymer B selected from the group of homopolymers and copolymers of alkylene oxides, vinyl pyrrolidone; and/or the group of homopolymers and copolymers of vinyl alcohol, saccharides, hydroxyalkyl cellulose; and
c an quaternary ammonium biocide,
for providing a anti-microbial effect on fabric articles.

## Patentansprüche

1. Verfahren, Wäsche eine antimikrobielle Wirkung zu verleihen, umfassend die Schritte des
a Ablagerns eines Polymerkomplexes, umfassend
i Polymer A, ausgewählt aus der Gruppe von Homopolymeren und Copolymeren von Carbonsäure, und
ii ein Polymer B, ausgewählt aus der Gruppe von Homopolymeren und Copolymeren von Alkylenoxiden, Vinylpyrrolidon und/oder der Gruppe von Homopolymeren und Copolymeren von Vinylalkohol, Sacchariden und Hydroxyalkylcellulose;
wobei das Polymer A und das Polymer B nicht aus der gleichen Klasse sind und
iii ein quaternäres Ammoniumbiozid, auf einen textilen Gegenstand, und
b Trocknenlassens des textilen Gegenstandes und
wobei das Textil zwischen den Schritten a und b nicht gespült wird.

2. Verfahren, Wäsche eine antimikrobielle Wirkung zu verleihen, gemäß Anspruch 1, wobei Polymer A in einer Konzentration zwischen 0,005 und 25 Gew.-% der Zusammensetzung vorliegt.

3. Verfahren, Wäsche eine antimikrobielle Wirkung zu verleihen, gemäß irgendeinem der Ansprüche 1 oder 2, wobei Polymer B in einer Konzentration zwischen 0,005 und 20 Gew.-% der Zusammensetzung vorliegt.

4. Verfahren, Wäsche eine antimikrobielle Wirkung zu verleihen, gemäß irgendeinem der Ansprüche 1 bis 3, wobei das quaternäre Ammoniumbiozid in einer Konzentration zwischen 0,01 und 10 Gew.-% der Zusammensetzung vorliegt.

5. Verfahren, Wäsche eine antimikrobielle Wirkung zu verleihen, gemäß irgendeinem der vorhergehenden Ansprüche, wobei der pH-Wert der Zusammensetzung zwischen 2 und 9 liegt.

6. Verwendung eines Polymerkomplexes umfassend
a Polymer A, ausgewählt aus der Gruppe von Homopolymeren und Copolymeren von Carbonsäure, und
b ein Polymer B, ausgewählt aus der Gruppe von Homopolymeren und Copolymeren von Alkylenoxiden, Vinylpyrrolidon und/oder der Gruppe von Homopolymeren und Copolymeren von Vinylalkohol, Sacchariden und Hydroxyalkylcellulose; und
c ein quaternäres Ammoniumbiozid,
um auf textilen Gegenständen eine antimikrobielle Wirkung zu erzielen.

## Revendications

1. Procédé de fourniture d'un effet anti-microbien à de la lessive comprenant les étapes consistant :
a à déposer un complexe polymère comprenant
i un polymère A choisi dans le groupe d'homopolymères et de copolymères d'acide carboxylique, et
ii un polymère B choisi dans le groupe d'homopolymères et de copolymères d'oxydes d'alkylène, de vinylpyrrolidone ; et/ou dans le groupe d'homopolymères et de copolymères d'alcool vinylique, de saccharides, d'hydroxyalkylcellulose ;
dans lequel le polymère A et le polymère B ne sont pas de la même classe et
iii un biocide d'ammonium quaternaire à un article textile, et
b à laisser l'article textile sécher ; et,
dans lequel le textile n'est pas rincé entre les étapes a et b.

2. Procédé de fourniture d'un effet anti-microbien à de la lessive selon la revendication 1, dans lequel le polymère A est présent dans une concentration de 0,005 à 25 % en poids de la composition.

3. Procédé de fourniture d'un effet anti-microbien à de la lessive selon l'une quelconque de la revendication 1 ou 2, dans lequel le polymère B est présent dans une concentration de 0,005 à 20 % en poids en poids de la composition.

4. Procédé de fourniture d'un effet anti-microbien à de la lessive selon l'une quelconque des revendications 1 à 3, dans lequel le bioacide d'ammonium quaternaire est présent dans une concentration de 0,01 à 10 % en poids de la composition.

5. Procédé de fourniture d'un effet anti-microbien à de la lessive selon l'une quelconque des revendications précédentes, dans lequel le pH de la composition est de 2 à 9.

6. Utilisation d'une combinaison d'un complexe polymère comprenant
a un polymère A choisi dans le groupe d'homopolymères et de copolymères d'acide carboxylique, et
b un polymère B choisi dans le groupe d'homopolymères et de copolymères d'oxydes d'alkylène, de vinylpyrrolidone ; et/ou le groupe d'homopolymères et de copolymères d'alcool vinylique, de saccharides, d'hydroxyalkylcellulose ; et
c un biocide d'ammonium quaternaire,
pour fournir un effet anti-microbien à des articles textiles.
